# EUROPEAN PATENT SPECIFICATION

(11) **EP 0 548 748 B1**
(45) Date of publication and mention of the grant of the patent: **13.09.1995**
(21) Application number: 92121304.7
(22) Date of filing: 15.12.1992
(51) Int. Cl.: B60L 11/18

(54) **Residual range indicator device for a storage battery-powered vehicle**
Restreichweitenanzeigevorrichtung für ein Speicherbatterie-getriebenes Fahrzeug
Dispositif de signalisation de distance résiduelle pour un véhicule entraîné par un accumulateur

(30) Priority: 24.12.1991 IT TO911039
(43) Date of publication of application: 30.06.1993
(73) Proprietor: FIAT AUTO S.p.A., 10135 Torino (IT)
(72) Inventor: Guerzoni, Roberto, I-10045 Piossasco (Torino) (IT); Varrone, Piergiorgio, I-10025 Pino Torinese (TO) (IT)
(74) Representative: Lotti, Giorgio

(56) References cited:
- DE-A- 3 142 038
- DE-A- 3 902 339
- IEEE TRANSACTIONS ON INDUSTR IAL ELECTRONICS vol. IE-34, no. 4, 1987, NEW YORKUS pages 447 - 456 C.C. CHAN ET AL 'COTROL STRATEGY OF PWM INVERTER DRIVESYSTEM FOR ELECTRIC VEHICLES'

## Description

This invention relates to a residual range indicator device for a storage battery-powered vehicle.

For electrically driven vehicles powered by storage batteries it is particularly important to know the residual range of the vehicle moment by moment. In this respect, such vehicles generally have a maximum range which is less than conventional internal combustion engine vehicles. The fact that recharging the batteries requires a considerable time increases the need for immediately usable information regarding the state of charge, end-of-discharge voltage as a function of temperature, etc., to indicate its usability. A residual range indicator device according to the preamble of independent claim 1 is already known from DE-A-3 142 038.

Calculating the true residual range of the vehicle from this collection of theoretical curves is however difficult and imprecise, especially considering the fact that the range of an electric vehicle when travelling a route depends strongly on the type of route itself.

Storage battery characteristics also change substantially as they degrade due to ageing.

The object of the present invention is to provide a residual range indicator device for a storage battery-powered electric vehicle and for the stated applications which is completely automatic, reliable and of low cost, and which provides a precise and reliable indication of the distance which the electric vehicle can still travel, independently of the storage battery conditions and taking account of the type of route which the vehicle is undertaking. This object is attained by a residual range indicator device for a storage battery-powered electric vehicle, comprising essentially a processor unit connected to a memory unit and to a display device, which is further connected to a device for measuring the distance travelled by said electric vehicle and to a device for measuring the charge present in the storage batteries, characterised in that said memory unit containing data relative to the electrical charge consumption of the vehicle as a function of the distance travelled, as a function of the type of route and as a function of at least one other measurable physical parameter, said processor unit executing a control programme comprising the following functions: identifying on the basis of the measurements made by said travelled distance measuring device and by said charge measuring device the type of route travelled by the electric vehicle; calculating on the basis of said data contained in said memory unit the distance which the electric vehicle is still able to travel; and displaying the value of said distance on said display device.

Advantageously, the residual range indicator device is also connected to a battery charger, said control programme executed by said processor unit comprising the function of updating, whenever said processor unit receives a charge commencement signal from said battery charger, the data contained in said memory unit by adding data relative to the last route followed, so that the indicator device is able, during normal use of the electric vehicle, to increase its degree of knowledge of the behaviour of the vehicle in relation to ever more route types.

The advantages achieved by the present invention are essentially that in this manner the residual range indication is presented to the user in the form of a distance still to be travelled rather than in other units which cannot be immediately interpreted. The fact that this indication results from a prediction which takes account of the type of route along which the vehicle is used implies that the indication dynamically adapts to route change.

In addition, the accuracy of the indicator device tends statistically to increase with the use of the vehicle, because of its capacity to absorb new data relative to different types of route during normal use of the vehicle.

The structural and operational characteristics and further advantages of a device according to the present invention will be more apparent from the description given hereinafter by way of non-limiting example with reference to the schematic accompanying drawings, in which:
Figure 1 shows a functional block diagram indicating the location of a device according to the present invention within an electric vehicle;
Figure 2 shows a functional block diagram of a device according to the present invention;
Figure 3 shows a first example of a flow diagram illustrating the operation of the device of Figure 2;
Figure 4 shows a family of curves relative to the power consumption of the vehicle at a determined storage battery temperature;
Figure 5 shows a diagram relative to the variation in the end-of-discharge voltage of the storage batteries against the kilometre/ampere-hour ratio at a determined storage battery temperature;
Figure 6 shows a second example of a flow diagram illustrating the operation of the device of Figure 2 with the storage batteries almost discharged;

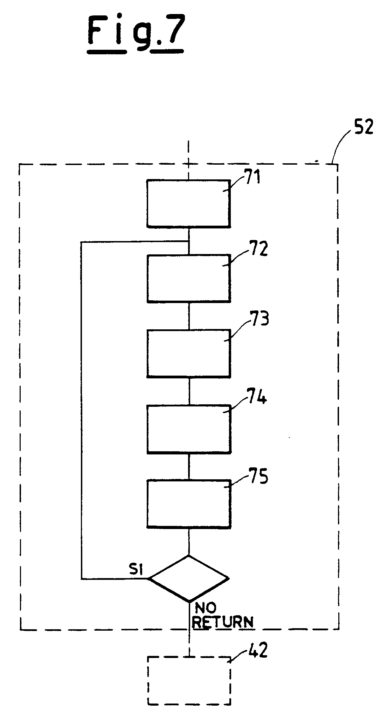

Figure 7 shows a third example of a flow diagram illustrating the operation of the device of Figure 2 with the storage batteries being recharged.

A battery charger 11 is connected to a group of storage batteries 12 which power an electric motor 13.

A trip odometer 14, connected to the electric motor 13, measures the distance travelled by the vehicle and displays the number of kilometres travelled on a display 15. The odometer 14 is also connected to a residual range indicator device, indicated overall by 16.

The residual range indicator device 16 is connected to the storage battery group 12 via an ampere-hour meter 17, a voltmeter 18 and a temperature sensor 19.

The temperature sensor 19 measures the temperature of the storage battery group 12, while the voltmeter 18 measures the voltage across the storage battery terminals.

The ampere-hour meter 17 measures the quantity of charge present in the storage batteries 12 by integrating with respect to time the electric current delivered by the storage batteries. The ampere-hour meter 17 can be usefully reset to a predefined value to nullify any errors accumulated with time.

The residual range indicator device 16 is also connected to the battery charger 11, so as to receive a signal of charging underway.

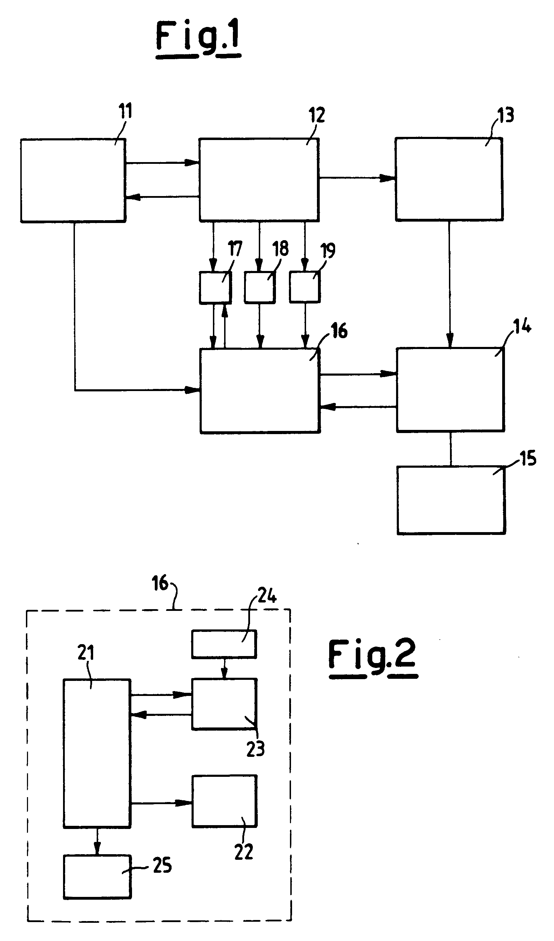

From Figure 2 it can be seen that the residual range indicator device 16 comprises a microprocessor 21 connected to an alphanumerical display 22 and to a RAM memory 23.

The RAM 23 is provided with a buffer battery 24 to prevent loss of the data stored in it should the main electrical supply fail.

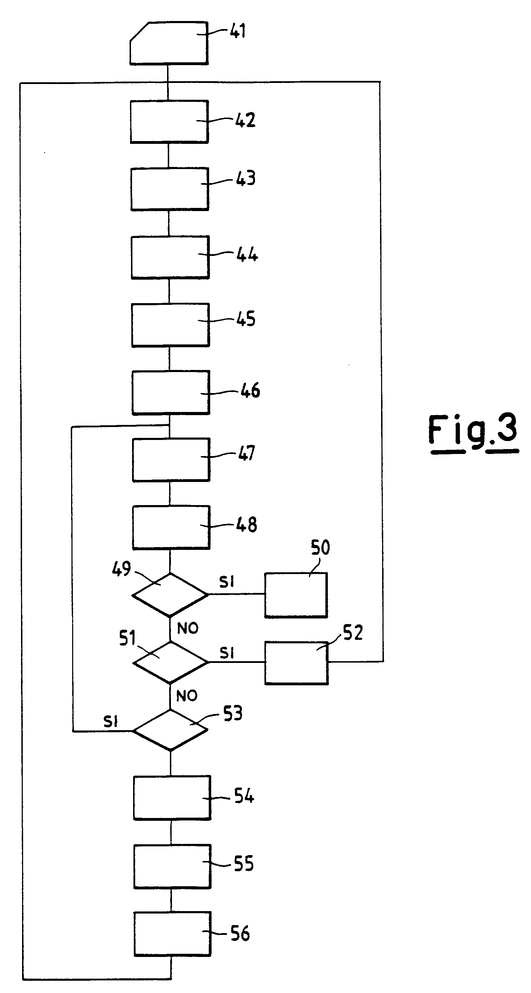

The microprocessor 21 is also connected to a flashing lamp 25. The operation of the residual range indicator device 16 will be more apparent from the flow diagram of Figure 3.

During the manufacture of the device, a number of different types of route such as town routes, motorway routes, mixed routes etc. are travelled several times using one or more standard vehicles.

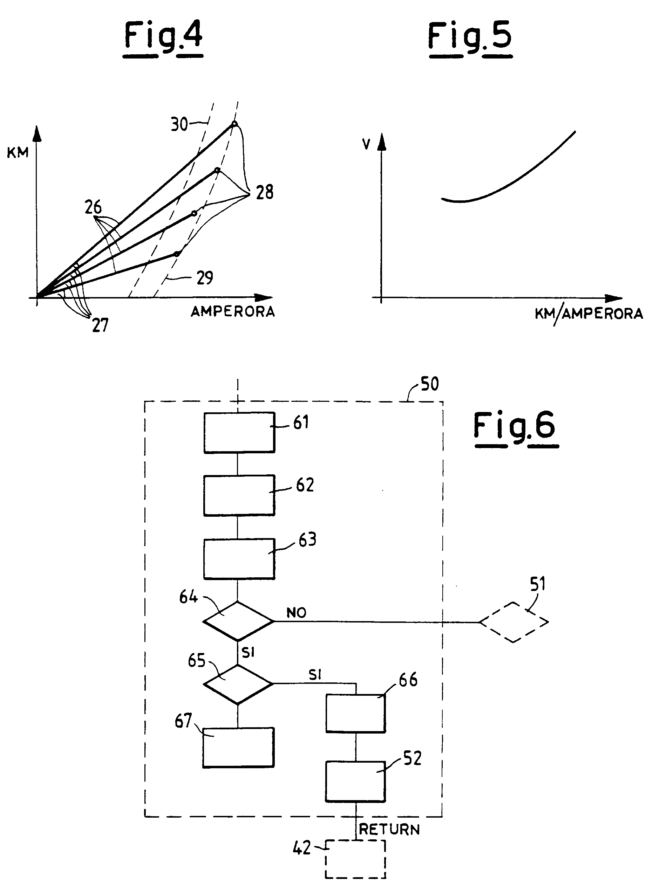

Each type of route is repeated at systematically different speeds and accelerations to obtain various "specific consumption" values (kilometres/ampere-hour). The end of each route is always determined by the permanent attaining of a minimum battery voltage. This minimum voltage is defined by the storage battery constructor on the basis of the discharge time and the temperature. At the end of each route the ampere-hours consumed, the kilometers travelled and the storage battery temperature are read. These data enable a respective diagram to be drawn for each temperature range. Each of these diagrams, of the type shown in Figure 4, indicates ampere-hours as the horizontal axis and km travelled as the vertical axis. In these diagrams each straight line of the plurality 26 represents a different type of route. As the number of routes which can in reality be travelled is necessarily finite, some intermediate straight lines can be obtained by interpolation.

The data relative to each straight line of the diagram are fed (step 41) into the RAM 23 in the form of pairs of gradients 27 and terminal points 28 indicating zero residual range.

The graph of Figure 4 also shows two curves 29 and 30. The curve 29, which joins the points 28, represents a zero residual range curve, whereas the curve 30 represents a "reserve fuel" pattern.

For each temperature range, experimentally obtained data relative to the variation in the storage battery end-of-discharge voltage against the kilometres/ampere-hour ratio (Figure 5) are also fed into the RAM 23. The microprocessor 21 selects (step 42) the data of one route among those memorized in the RAM 23 and defined during the calibration step 41 as standard routes. This standard route hence becomes the current route. Having selected a route, the microprocessor 21 reads (step 43) and memorizes (step 44) the value in ampere-hours of the charge present in the storage batteries 12.

On the basis of the selected route the microprocessor 21 calculates the number of kilometres which can still be travelled (step 45). This operation is effected by simple algebraic operations starting from the value of the zero residual range point 28 and the number of kilometres corresponding, in the current route, to the charge value read during step 43.

Then (step 46), the microprocessor 21 initialises a trip odometer at zero.

At this point a reading (step 47) is taken of the number of kilometres travelled by the vehicle from the commencement of step 43, and the trip odometer is suitably incremented.

The microprocessor 21 then checks (test 49) that this result is equal to or less than a predetermined value, for example ten kilometres.

If it is, the indicator device enters a "reserve fuel" control state (step 50).

If it is greater, the microprocessor 21 checks (test 51) if the battery charger 11 is feeding a charging-underway signal.

If the test 51 has had a positive result, the indicator device enters a storage battery charging control state (step 52) and returns to step 42.

In contrast, if the test 51 is negative, it is checked (test 53) whether the value contained in the trip odometer is less than a predetermined value, for example five kilometres.

If the test 53 has a positive result, the microprocessor 21 returns to step 47, otherwise it takes a new reading (step 54) of the charge present in the storage batteries 12. Having done this, the temperature of the storage batteries 12 is read (step 55).

At this point a calculation step commences (step 56) in which:
a) the charge consumed is calculated by taking the difference between the value memorized in step 44 and the value read in step 54;
b) the kilometres/ampere-hour ratio is calculated;
c) the diagram relative to the temperature measured in step 55 is sought among the route data stored in the RAM 23;
d) the straight line having the gradient corresponding to the value calculated under point b) is sought in the diagram selected under the preceding point;
e) the route determined in this manner becomes the current route.

On termination of the calculation step 56, the microprocessor 21 returns to step 44 with a new current route and recommences the cycle.

It is apparent that in this manner the residual range indications automatically adapt to the type of route and are reliable even if the route characteristics change during its travel.

As the operations performed by the microprocessor 21 do not require a high calculation speed, a low-cost microprocessor can be used.

In a preferred embodiment, at the commencement of the "reserve fuel" control step 50, the microprocessor 21 causes the writing on the display to flash (step 61).

The microprocessor 21 then preselects on the ammeter (step 62) a value established by the curve 30. In this manner any errors accumulated by the ampere-hour meter in the preceding charging and discharging are nullified. As the ampere-hour meter 17 is reset at each "reserve fuel" situation, a low-accuracy and hence low-cost ampere-hour meter can be used without compromising the overall performance of the device 16.

After this, the voltage of the storage batteries 12 is read (step 63) and it is checked (test 64) whether the voltage is permanently less than the minimum end-of-discharge voltage at the current temperature and at the correctly selected kilometres/hour ratio.

If the test 64 is negative, the microprocessor 21 leaves step 50 and proceeds with test 51.

If the test is positive, it is checked (test 65) whether the battery charger 11 is feeding a charging-underway signal. If so, the microprocessor commences a calculation step (step 66) in which:
a) the charge consumed from the beginning of step 42 is calculated;
b) the number of kilometres travelled from the beginning of step 42 is calculated;
c) the kilometres/ampere-hour ratio 27 from the beginning of step 42 is calculated;
d) the value of the zero residual charge point 28 is calculated or extrapolated;
e) the data relative to the straight line defined at the preceding points are fed into the RAM 23, to be added to the family of straight lines 26 or to cover an already existing straight line.

It is extremely advantageous that in this manner the data of each route travelled by the user are used to extend the "learning" of the vehicle. This statistical updating also enables the reduction in gradients 27 due to the ageing of the storage batteries 12 to be compensated. It is also advantageous that each vehicle is automatically personalized on the basis of its performance, so compensating any differences between the various models of a series. This obviously also implies that any modifications made to the vehicle are automatically compensated by this "learning" technique.

The storage battery charging control step 52 is then effected, after which the system returns to step 42.

However, if the test 65 is negative, the microprocessor 21 initiates a stop procedure (step 67) in which:
a) the trip odometer 14 is zeroed;
b) the emergency lamp 25 is made to flash;
c) a reverse count is effected which enables the user to still move the vehicle for one minute, after which the vehicle is halted.

According to a preferred embodiment, at the commencement of the charging control step 52 for storage battery 12, the microprocessor 21 selects the standard route as the current route (step 71).

This having been done, the storage battery temperature is read (step 72), as is the charge present in the storage batteries (step 73).

A calculation step (step 74) is then effected in which the residual range is calculated by simple algebraic operations starting from the value of the zero residual range point 28 and the number of kilometres corresponding, in the standard route, to the charge value read during step 73.

On termination of the calculation step 74, the microprocessor 21 displays (step 75) the result on the display 22.

At this point it is checked (test 76) whether the battery charger 11 is continuing to feed the charging-underway signal.

If the result of test 76 is positive, the microprocessor 21 returns to step 72 and the cycle recommences. If the result is negative, the microprocessor 21 leaves step 52 and returns to step 42.

It is apparent that in this manner, even during storage battery recharging, the user can obtain direct information on the state of charge of the storage batteries, in terms of residual range in kilometres.

## Claims

1. A residual range indicator device (16) for a storage battery-powered electric vehicle, comprising essentially a processor unit (21) connected to a memory unit (23) and to a display device (22), which is further connected to a device for measuring the distance travelled by said electric vehicle and to a device for measuring the charge present in the storage batteries, characterised in that said memory unit (23) containing data relative to the electrical charge consumption of the vehicle as a function of the distance travelled, as a function of the type of route and as a function of at least one other measurable physical parameter, said processor unit (21) executing a control programme comprising the following functions: identifying, on the basis of the measurements made by said travelled distance measuring device and by said charge measuring device, the type of route travelled by the electric vehicle; calculating, on the basis of said data contained in said memory unit, the distance which the electric vehicle is still able to travel; and displaying the value of said distance on said display device (22).

2. A residual range indicator device (16) as claimed in claim 1, characterised in that said indicator device (16) is also connected to a battery charger, said control programme executed by said processor unit comprising the function of updating, whenever said processor unit receives a charge commencement signal from said battery charger, the data contained in said memory unit (23) by adding data relative to the last route followed, so that the indicator device is able, during normal use of the electric vehicle, to increase its degree of knowledge of the behaviour of the vehicle in relation to ever more route types.

3. A residual range indicator device (16) as claimed in claim 1, characterised in that said control programme executed by said processor unit (21) comprises the function of indicating to the user, by means of said display device (22), the fact that the calculation of the distance the electric vehicle is still able to travel has a result less than a certain minimum value.

4. A residual range indicator device (16) as claimed in claim 1, characterised by further comprising a warning device and being connected to a device form measuring the voltage of said storage batteries, said control programme executed by said processor unit comprising the function of activating said warning device whenever the measured voltage is permanently less than the minimum discharge voltage of said storage batteries.

5. A residual range indicator device (16) as claimed in claim 1, characterised in that said indicator device (16) is further connected to a device for measuring the temperature of said storage batteries, said memory unit (23) also containing data relative to the electrical load consumption as a function of the storage battery temperature, and said processor unit executing a control programme comprising the following functions: identifying on the basis of the measurements made by said travelled distance measuring device, by said charge measuring device and by said temperature measuring device the type of route travelled by the electric vehicle; calculating on the basis of said data contained in said memory unit the distance which the electric vehicle is still able to travel; and displaying the value of said distance on said display device.

6. A residual range indicator device (16) as claimed in claim 1, characterised in that said indicator device (16) is also connected to a battery charger, said control programme executed by said processor unit (21) comprising the following functions: whenever said processor unit receives a charge commencement signal from said battery charger, calculating moment by moment on the basis of data contained in said memory unit relative to a standard route the distance which the electric vehicle is still able to travel; and displaying moment by moment the value of said distance on said display device.

7. A residual range indicator device (16) as claimed in claim 1, characterised in that said device for measuring the charge present in said storage batteries is an ampere-hour meter.

8. A residual range indicator device (16) as claimed in claim 7, characterised in that said ampere-hour meter has an input for correctly re-initializing the value of the measured charge.

## Patentansprüche

1. Restreichweiten-Anzeigevorrichtung (16) für ein von einer Speicherbatterie angetriebenes elektrisches Fahrzeug, umfassend im wesentlichen an eine Speichereinheit (23) und an einer Darstellungsvorrichtung (22) angeschlossene Prozessoreinheit (21), welche ferner an eine Vorrichtung zur Messung der durch das elektrische Fahrzeug gefahrenen Entfernung und an eine Vorrichtung zur Messung der in den Speicherbatterien vorhandenen Ladung angeschlossen ist, dadurch gekennzeichnet, daß die Speichereinheit (23) Daten enthält, die auf den elektrischen Ladungsverbrauch des Fahrzeuges in Abhängigkeit von der gefahrenen Entfernung, in Abhängigkeit von der Art der Straße und in Abhängigkeit von wenigstens einem anderen meßbaren, physikalischen Parameter bezogen sind, wobei die Prozessoreinheit (21) ein Steuerprogramm ausführt, das die folgenden Funktionen umfaßt:
Identifizierung der Art der Straße, die durch das elektrische Fahrzeug befahren wird, auf der Basis der Messungen, die durch die Meßeinrichtung für die gefahrene Entfernung und durch die Ladungsmeßeinrichtung durchgeführt werden; Berechnung der Entfernung, die das elektrische Fahrzeug noch fahren kann, auf der Basis der in der Speichereinheit enthaltenen Daten; und Anzeige des Entfernungswertes auf der Darstellungsvorrichtung (22).

2. Restreichweiten-Anzeigevorrichtung (16) nach Anspruch 1, dadurch gekennzeichnet, daß die Anzeigevorrichtung (16) ebenfalls an einen Batterielader angeschlossen ist, daß das von der Prozessoreinheit ausgeführte Steuerprogramm die Funktion der Fortschreibung der in der Speichereinheit (23) enthaltenen Daten durch Addition von Daten bezüglich der zuletzt gefahrenen Strecke immer dann umfaßt, wenn die Prozessoreinheit ein Ladungsbeginn-Signal von dem Batterielader empfängt, so daß die Anzeigevorrichtung in der Lage ist, während der normalen Verwendung des elektrischen Fahrzeuges ihren Kenntnisstand von dem Verhalten des Fahrzeuges bezüglich von immer mehr Straßentypen zu verbessern.

3. Restreichweiten-Anzeigevorrichtung (16) nach Anspruch 1, dadurch gekennzeichnet, daß das durch die Prozessoreinheit (21) ausgeführte Steuerprogramm die Funktion der Anzeige der Tatsache für den Benutzer durch die Darstellungsvorrichtung (22) umfaßt, daß die Berechnung der Entfernung, die das Fahrzeug noch in der Lage ist zurückzulegen, ein Resultat aufweist, welches geringer als ein bestimmter Minimalwert ist.

4. Restreichweiten-Anzeigevorrichtung (16) nach Anspruch 1, dadurch gekennzeichnet, daß sie ferner eine Warnvorrichtung umfaßt und an eine Vorrichtung zur Messung der Spannung der Speicherbatterien angeschlossen ist, und daß das durch die Prozessoreinheit ausgeführte Steuerprogramm die Funktion der Aktivierung der Warnvorrichtung immer dann umfaßt, wenn die gemessene Spannung permanent geringer als die minimale Entladespannung der Speicherbatterien ist.

5. Restreichweiten-Anzeigevorrichtung (16) nach Anspruch 1, dadurch gekennzeichnet, daß die Anzeigevorrichtung (16) ferner an eine Vorrichtung zur Messung der Temperatur der Speicherbatterien angeschlossen ist, daß die Speichereinheit (23) ebenfalls Daten bezuglich des elektrischen Lastverbrauchs in Abhängigkeit von der Speicherbatterie Temperatur enthält, und daß die Prozessoreinheit ein Steuerprogramm ausführt, welches die folgenden Funktionen umfaßt:
Identifizierung der Art der durch das elektrische Fahrzeug durchfahrenen Straße auf der Basis der Messungen durch die Meßvorrichtung für die gefahrene Entfernung, durch die Ladungs-Meßvorrichtung und durch die Temperatur-Meßvorrichtung; Berechnung der Entfernung, die das elektrische Fahrzeug noch zurücklegen kann, auf der Basis der in der Speichereinheit enthaltenen Daten; und Anzeige des Wertes der Entfernung auf der Darstellungsvorrichtung.

6. Restreichweiten-Anzeigevorrichtung (16) nach Anspruch 1, dadurch gekennzeichnet, daß die Anzeigevorrichtung (16) ebenfalls an einen Batterielader angeschlossen ist, daß das durch die Prozessoreinheit (21) ausgeführte Steuerprogramm die folgenden Funktionen umfaßt:
Fortlaufende Berechnung der Entfernung, die das elektrische Fahrzeug noch zurücklegen kann, auf der Basis von in der Speichereinheit enthaltenen Daten bezüglich einer Standardstrecke, immer dann, wenn die Prozessoreinheit ein Ladungsbeginn-Signal von dem Batterielader empfängt; und fortlaufende Anzeige des Wertes der Entfernung auf der Darstellungsvorrichtung.

7. Restreichweiten-Anzeigevorrichtung (16) nach Anspruch 1, dadurch gekennzeichnet, daß die Vorrichtung zur Messung der in den Speicherbatterien vorhandenen Ladung ein Amperstunden-Meßgerät ist.

8. Restreichweiten-Anzeigevorrichtung (16) nach Anspruch 7, dadurch gekennzeichnet, daß das Amperstunden-Meßgerät einen Eingang aufweist zum korrekten Neuauslösen des Wertes der gemessenen Ladung.

## Revendications

1. Dispositif d'indication d'autonomie résiduelle (16) pour un véhicule électrique alimenté par une batterie d'accumulateurs, comprenant principalement une unité de processeur (21) reliée à une unité de mémoire (23) et à un dispositif d'affichage (22), lequel est, de plus, relié à un dispositif pour mesurer la distance parcourue par ledit véhicule électrique et à un dispositif pour mesurer la charge présente dans les batteries d'accumulateurs, caractérisé en ce que ladite unité de mémoire (23) contient des données relatives à la consommation de charge électrique du véhicule comme une fonction de la distance parcourue, comme une fonction du type de route et comme une fonction d'au moins un autre paramètre physique mesurable, ladite unité de processeur (21) exécutant un programme de commande comprenant les fonctions suivantes : identification, sur la base des mesures effectuées par ledit dispositif de mesure de distance parcourue et par ledit dispositif de mesure de charge, du type de route parcourue par le véhicule électrique ; calcul, sur la base desdites données contenues dans ladite unité de mémoire, de la distance que le véhicule électrique est encore capable de parcourir ; et affichage de la valeur de ladite distance sur ledit dispositif d'affichage (22).

2. Dispositif d'indication d'autonomie résiduelle (16) selon la revendication 1, caractérisé en ce que ledit dispositif d'indication (16) est également relié à un chargeur de batteries, ledit programme de commande exécuté par ladite unité de processeur comprenant la fonction de mise à jour, toutes les fois que ladite unité de processeur reçoit un signal de début de charge en provenance dudit chargeur de batterie, des données contenues dans ladite unité de mémoire (23) en ajoutant des données relatives à la dernière route suivie, de sorte que le dispositif d'indication soit capable, pendant l'utilisation normale du véhicule électrique, d'augmenter son degré de connaissance du comportement du véhicule en relation à toujours plus de types de routes.

3. Dispositif d'indication d'autonomie résiduelle (16) selon la revendication 1, caractérisé en ce que ledit programme de commande exécuté par ladite unité de processeur (21) comprend la fonction d'indiquer à l'utilisateur, au moyen dudit dispositif d'affichage (22), le fait que le calcul de la distance que le véhicule électrique est encore capable de parcourir a un résultat inférieur à une certaine valeur minimale.

4. Dispositif d'indication d'autonomie résiduelle (16) selon la revendication 1, caractérisé comme comprenant, de plus, un dispositif d'alerte et comme étant relié à un dispositif pour mesurer la tension desdites batteries d'accumulateurs, ledit programme de commande exécuté par ladite unité de processeur comprenant la fonction d'activation dudit dispositif d'alerte toutes les fois que la tension mesurée est en permanence inférieure à la tension de décharge minimale desdites batteries d'accumulateurs.

5. Dispositif d'indication d'autonomie résiduelle (16) selon la revendication (1), caractérisé en ce que ledit dispositif d'indication (16) est, de plus, relié à un dispositif pour mesurer la température desdites batteries d'accumulateurs, ladite unité de mémoire (23) contenant également des données relatives à la consommation de charge électrique comme une fonction de la température de la batterie d'accumulateurs, et ladite unité de processeur exécutant un programme de commande comprenant les fonctions suivantes : identification, sur la base des mesures effectuées par ledit dispositif de mesure de distance parcourue, par ledit dispositif de mesure de charge et par ledit dispositif de mesure de température, du type de route parcourue par le véhicule électrique ; calcul, sur la base desdites données contenues dans ladite unité de mémoire, de la distance que le véhicule électrique est encore capable de parcourir ; et affichage de la valeur de ladite distance sur ledit dispositif d'affichage.

6. Dispositif d'indication d'autonomie résiduelle (16) selon la revendication 1, caractérisé en ce que ledit dispositif d'indication (16) est également relié à un chargeur de batteries, ledit programme de commande exécuté par ladite unité de processeur (21) comprenant les fonctions suivantes : toutes les fois que ladite unité de processeur reçoit un signal de début de charge en provenance dudit chargeur de batterie, calcul, à tout moment, sur la base des données contenues dans ladite unité de mémoire relatives à une route standard, de la distance que le véhicule électrique est encore capable de parcourir ; et affichage, à tout moment, de la valeur de ladite distance sur ledit dispositif d'affichage.

7. Dispositif d'indication d'autonomie résiduelle (16) selon la revendication 1, caractérisé en ce que ledit dispositif pour mesurer la charge présente dans lesdites batteries d'accumulateurs est un ampèreheure-mètre.

8. Dispositif d'indication d'autonomie résiduelle (16) selon la revendication 7, caractérisé en ce que ledit ampèreheure-mètre a une entrée pour réinitialiser correctement la valeur de la charge mesurée.
